# EUROPÄISCHE PATENTSCHRIFT

(11) **EP 1 123 825 B1**
(45) Veröffentlichungstag und Bekanntmachung des Hinweises auf die Patenterteilung: **24.11.2004**
(21) Anmeldenummer: 01103017.8
(22) Anmeldetag: 08.02.2001
(51) Int. Cl.: B60J 1/20

(54) **Heckfensterrollo**
Roller blind for rear window
Store à enrouleur pour fenêtre arrière

(30) Priorität: 09.02.2000 DE 10005951
(43) Veröffentlichungstag der Anmeldung: 16.08.2001
(73) Patentinhaber: BOS GmbH & Co. KG, 73773 Aichwald (DE)
(72) Erfinder: Schlecht, Werner P., 71665 Vaihingen (DE); Seel, Holger, 71134 Aidlingen (DE); Walter, Herbert, 73061 Ebersbach (DE)
(74) Vertreter: Patentanwälte Rüger, Barthelt & Abel

(56) Entgegenhaltungen:
- DE-A- 3 415 930
- DE-A- 3 608 927
- US-A- 5 404 926
- US-A- 5 752 560
- US-A- 5 860 466

## Beschreibung

Für die hintere Heckscheibe von PKW sind eine Vielzahl von Lösungen bekannt, um ein dort befindliches Fensterrollo elektrisch fernbedient aus- und einzufahren.

Eine Lösung ist beispielsweise in EP-C-0 240 747 gezeigt, bei der zum Aufspannen lediglich biegesteife Hebel verwendet werden. Das bekannte Heckscheibenrollo weist einen Sockel auf, in dem eine Wickelwelle drehbar gelagert ist. Die Wickelwelle ist mit Hilfe eines Federmotors in Aufwickelrichtung einer Rollobahn vorgespannt, die an der Wickelwelle mit einer Kante angebracht ist. Die andere Kante ist mit einer Zugstange verbunden, an der zwei einarmige Hebel angreifen, die an dem Sockel gelagert sind. Die Lagerachsen der Hebel verlaufen rechtwinkelig zu der Wickelwelle. Beim Aufrichten der Hebel wird die Rollobahn von der Wickelwelle abgezogen.

Das bekannte Heckscheibenrollo eignet sich nicht für die Heckscheibe von Kombi-PKW und ähnlichen Kraftfahrzeugen mit großer Heckklappe.

Die DE 36 08 927 A1 zeigt eine andere Form eines Heckscheibenrollos. Das Heckscheibenrollo weist wiederum eine Wickelwelle auf, an der mit einer Kante eine Rollobahn befestigt ist. Die andere Kante der Rollobahn ist mit einem Auszugsprofil oder Spriegel versehen, der endseitig in Führungsschienen geführt ist. Die Wickelwelle wird mit Hilfe eines Elektromotors im Sinne des Auf- oder Abwickelns der Rollobahn in Gang gesetzt.

Um die Rollobahn in ihrer Betriebsstellung gespannt zu halten, greift an jedem Ende des Auszugsprofils jeweils eine Zugfeder unmittelbar an. Die Zugfeder verläuft in der Führungsschiene zu deren von der Wickelwelle abliegenden Ende. An diesem Ende befindet sich ein Umlenkstück, durch das die Zugfeder hindurch führt, um im weiteren Verlauf parallel zur Führungsschiene zu liegen.

Ausgehend hiervon ist es Aufgabe der Erfindung ein elektrisch bedienbares Heckfensterrollo zu schaffen, das ohne Hebel auskommt.

Bei dem erfindungsgemäßen Heckfensterrollo ist eine drehbar gelagerte Wickelwelle vorgesehen, an der mit einem Randabschnitt der Zuschnitt der Rollobahn befestigt ist. An einem von diesem Abschnitt anderen abliegenden Abschnitt des Rollobahn greift ein Betätigungselement an, um die Rollobahn von der Wickelwelle abzuziehen und im aufgespannten Zustand zu halten. Zum Ein- und Ausfahren der Rollobahn werden kraftbetätigte Antriebsmittel verwendet.

Der Elektromotor wirkt mit der Wickelwelle zusammen, während die Zugfeder jeweils am anderen Ende der Rollobahn angreifen. Wenn der Elektromotor mit der Wickelwelle unmittelbar getrieblich verbunden ist, ist derjenige Teil der Rollobahn, der den größten Weg zurücklegt, über ein Seil mit einer Zugfeder verbunden. Dies gestattet unter anderem auch auf einfache Weise, unterschiedliche Laufwege der Betätigungsmittel auszugleichen, wenn beispielsweise ein Betätigungsmittel in einer Geraden und das andere in einer gekrümmten Führungsschiene läuft.

Auf diese Weise kann beispielsweise von der Fahrerseite her, das betreffende Heckfensterrollo gesteuert werden. Darüber hinaus gestattet die neue Konstruktion das Heckfensterrollo weitgehend unterhalb der Hutablage verschwinden zu lassen, wenn das Rollo bei einem Kombi-PKW verwendet wird. Im eingefahrenen Zustand ist es dann praktisch vollständig hinter die Umrisse des Fensters zurückgezogen.

Die Wickelwelle kann je nach den Platzverhältnissen und der besonderen Karosserieform vertikal, beispielsweise in der C-Säule, im Heckklappenprofil in der Nähe der C-Säule eines PKW oder parallel zur Unterkante des Heckfenstern angeordnet sein.

Die Anbringung der Wickelwelle seitlich neben der Fensterrahmenkante gestattet es darüber hinaus, die Wickelwelle in jenem Bereich der Klappe unterzubringen, wo sie nicht mit dem Scheibenwischemotor kollidiert.

Im vollständig aufgespannten Zustand kann die Oberkante des Rollobahnzuschnittes in hakenförmigen Taschen aufgenommen sein. Diese verhindern, Schwingungen der Oberkante der aufgespannten Rollobahn durch die Fahrzeugerschütterungen. Solche Schwingungen lassen sich auch weitgehend vermeiden, wenn die Schubglieder derart gerichtet sind, dass die Oberkante der Rollobahn beim Ausfahren auf der Innenseite der Scheibe entlang gleitet, weil sie an die Scheibe angedrückt wird.

Eine sehr stabile Führung der Rollobahn ergibt sich, wenn die Rollobahn zwischen zwei Führungsschienen geführt wird, die ausgehend von der Wickelwelle etwa in die gleiche Richtung verlaufen. Da diese Führungsschienen wegen der Heckfenstergeometrie nicht zueinander parallel verlaufen, enthält die Rollobahn zumindest einen Spriegel, der längenverstellbar ist. Er passt sich damit selbstätig dem sich verändernden Abstand zwischen den Führungsschienen an.

Um die Betätigung und Steuerung der Rollobahn möglichst einfach zu gestalten, umfassen die Antriebsmittel des erfindungsgemäßen Heckrollos wenigstens einen Elektromotor sowie Federmittel. Zwischen dem Elektromotor und den Federmitteln liegt kinematisch die Rollobahn, wobei der Antriebsmotor die Position der Ober- oder Seitenkante der Rollobahn definiert, während die Federmittel als "Slave-Antrieb" für die Vorspannung in der Rollobahn sorgen.

Im übrigen sind Weiterbildungen der Erfindung Gegenstand von Unteransprüchen.

An Hand der Zeichnung wird die Erfindung erläutert. Es zeigen:
Fig. 1 den Heckbereich einer Limousine, mit Blick auf die Außenseite der Heckscheibe, in einer abgebrochenen perspektivischen Darstellung,
Fig. 2 wesentliche Funktionsteile des Heckrollos gemäß Fig. 1, in einer perspektivischen, schematischen Darstellung, und
Fig. 3 ein Ausführungsbeispiel des Heckrollos mit zwei Führungsschienen in einer schematisierten Darstellung.

In der nachfolgenden Figurenbeschreibung werden Begriffe wie "vorne", "hinten", "oben" oder "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicher Weise gebraucht werden.

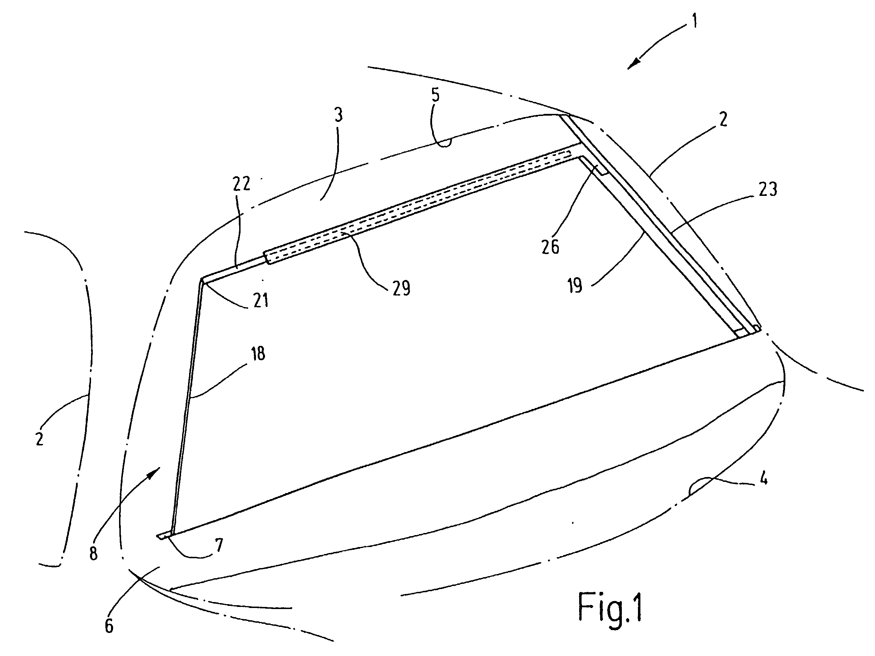

In Fig. 1 ist durch strichpunktierte Linien schematisiert die Heckpartie eines Kraftfahrzeuges 1 mit einer linken und einer rechten C-Säule angedeutet. Zwischen den C-Säulen 2 erstreckt sich Heckscheibe 3 von einer Unterkante 4 bis zu einer Dachhinterkante 5. Vor der Heckscheibe 3 befindet sich eine Hutablage 6 mit einem über die Breite durchlaufenden Schlitz 7. Weiterhin ist im Inneren des Kraftfahrzeuges 1 ein Fensterrollo 8 zu erkennen, das in Fig. 1 in der ausgefahrenen Stellung gezeigt ist.

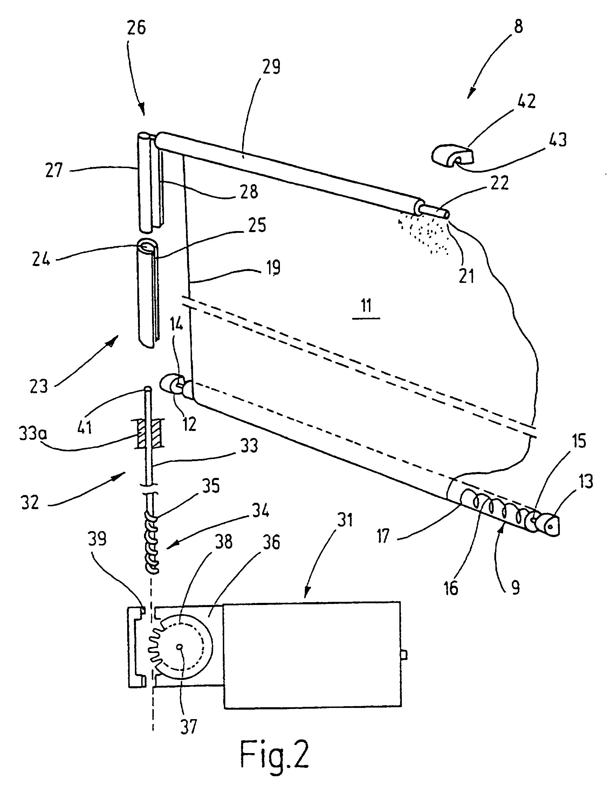

Wie sich aus Fig. 2 ergibt, gehören zu dem Heckfensterrollo 8 eine Wickelwelle 9, die unterhalb der Hutablage 6 drehbar gelagert ist, sowie eine Rollobahn 11.

Zur Lagerung der Wickelwelle 9 sind an der Unterseite

Wie sich aus Fig. 2 ergibt, gehören zu dem Heckfensterrollo 8 eine Wickelwelle 9, die unterhalb der Hutablage 6 drehbar gelagert ist, sowie eine Rollobahn 11.

Zur Lagerung der Wickelwelle 9 sind an der Unterseite der Hutablage 6 neben dem Schlitz 7 zwei Lagerböcke 12 und 13 die Lagerzapfen 14 und 15 aufnehmen, die axial aus der rohrförmigen Wickelwelle 9 hervorstehen. In der Wickelwelle 9 befindet sich ein schematisch gezeigter Federmotor 16, der bei 17 mit der Wickelwelle 9 fest verbunden ist und dessen anderes Ende drehfest an den Lagerzapfen 15 angekoppelt ist. Der Lagerzapfen 15 wiederum sitzt drehfest im den Lagerbock 13. Der Federmotor 16 bildet einen Teil der Antriebseinrichtung des Heckfensterrollos 8 und erzeugt eine Vorspannkraft im Sinnes eines Aufwickeln der Rollobahn 11 auf die Wickelwelle 9. Hierzu ist die Rollobahn 11 an der Wickelwelle 9 beispielsweise mittels eines Keders in bekannter Weise befestigt.

Die Rollobahn 11 besteht aus einem trapezförmigen Zuschnitt aus einer Kunststofffolie, die ausreichend das Sonnenlicht abschirmt.

Die Rollobahn 11 wird von einer linken und einer rechten Seitenkante 18, 19 sowie einer oberen Kante 21 und einer an der Wickelwelle 9 befestigten, nicht erkennbaren Kante, begrenzt.

An der oberen Kante 21 ist eine beispielsweise aus einem Kunststoffprofil bestehende Randverstärkungsleiste 22 angebracht, die von der linken bis zur rechten Seitenkante 12, 13 reicht.

Zu dem Heckfensterrollo 8 gehört ferner eine einzige Führungsschiene 23, die aus dem Rolloschlitz 7 kommend bis zu der Dachhinterkante 5 reicht und dort befestigt ist; sie verläuft neben der rechten C-Säule 2 zu dieser etwa parallel. Eine zweite Führungsschiene ist bei diesem Ausführungsbeispiel nicht vorhanden.

In Fig. 2 ist lediglich ein Abschnitt zu erkennen. Die Führungsschiene 23 besteht sich aus einem C-förmigen Profil mit einer hintergriffigen Führungsnut 24. Die Führungsnut 24 öffnet sich an einem Schlitz 25 in Richtung auf die Rollobahn 11.

In der Führungsschiene 23 läuft ein Schlitten 26, bestehend aus einem im Querschnitt an den Innenraum der Führungsnut 24 angebrachten Grundkörper 27, von dem ein leistenförmiger Flansch 28 ausgeht, der durch den Schlitz 25 nach außen ragt. Im einfachsten Falle ist der Grundkörper 27 im Wesentlichen zylindrisch und der Innenraum der Führungsnut 24 der Führungsschiene 23 ebenfalls zylindrisch.

An dem Flansch 28 ist ein Ausleger 29 befestigt, der von dem Grundkörper 27 im Wesentlichen rechtwinkelig wegsteht und seinerseits die Form einer Führungsschiene hat, in der die Randverstärkungsleiste 22 längs verschieblich aufgenommen ist. Der Ausleger 29 ist in der Weise gestaltet, dass die Randverstärkungsleiste 22 lediglich einen Freiheitsgrad hat, nämlich in Richtung parallel zur Längserstreckung des Auslegers 29. In Richtung senkrecht dazu ist sie in dem Ausleger 29 gefesselt.

Um das Heckfensterrollo 8 wahlweise ein- und auszufahren, gehört zu der Antriebseinrichtung neben dem Federmotor 16 ein Getriebemotor 31, der über ein Betätigungsglied 32 mit dem Schlitten 26 gekoppelt ist. Das Betätigungsglied 32 wird von einem drucksteifen, linienförmigen Element, beispielsweise einem flexiblen Metall- oder Kunststoffdraht 33, der Seele eines Bowdenzugs oder einer schubsteifgeführten, verseilten Drahtlitze gebildet. Zumindest an dem motorseitigen Ende trägt das Betätigungsglied 32 auf seiner Außenumfangsfläche eine eine Schraube oder Schnecke 34 bildende Drahtwicklung 35 die unverschiebbar mit dem Betätigungsglied 32 verbunden ist. Betätigungsglieder dieser Art sind auch unter der Handelsbezeichnung "SU-flexwelle" verfügbar und werden unter anderem bei Fensterhebern eingesetzt.

Der Antriebsmotor 31 ist ein permanent erregter Gleichstrommotor, dem ein Untersetzungsgetriebe 36 nachgeordnet ist. Auf einer Ausgangswelle 37 des Getriebes 36 sitzt drehfest ein Stirnzahnrad 38, dessen Teilung mit der Teilung der Schnecke oder Schraube 34 übereinstimmt.

Neben dem Stirnzahnrad 38 befindet sich in dem Gehäuse des Getriebes 36 eine Führung 39, die derart gestaltet ist, dass sie die Schraube 34 des Betätigungsgliedes 32 tangential zu dem Ausgangszahnrad 38 führt und erzwingt, dass die Zähne des Stirnzahnrades 38 formschlüssig zwischen den Windungen der Schraube 34 eingreifen können.

Das Betätigungsglied 32 verbindet das Stirnzahnrad 38 getrieblich mit dem Schlitten 26, und zwar wird es ausgehend von dem Getriebe 36 bzw. der dort vorhanden Führung 39 drucksteif in einer Hülle 33a bis zum unteren Ende der Führungsschiene 23 geführt. An dieser Stelle tritt das Betätigungsglied 32 in den Innenraum der Führungsnut 24 ein. Das freie Ende 41 des Betätigungsgliedes 32 liegt frei anstoßend am unteren Ende des Führungsschlittens 26 an.

Im eingebauten Zustand sind bei geöffneten Heckfensterrollo 8 nur die Führungsschiene 23 zu erkennen. Die Führungsschiene 23 verläuft neben der rechten Fensterkante und verschwindet somit weitgehend. Lediglich der Ausleger 29 wäre in dem Schlitz 7 zu erkennen, durch den hindurch die Rollobahn 11 nach oben ausgefahren wird.

Die Handhabung und Funktionsweise des beschrieben Heckfensterrollos 8 ist wie folgt:

Im Ruhezustand ist die Rollobahn 11 unter der Wirkung des Federmotors 16 auf die Wickelwelle 9 aufgewickelt. Der Schlitten 26 ist in der Führungsschiene 23 nach unten gefahren, soweit bis der Ausleger 29 den zuvor erwähnten Rolloschlitz 7 entsprechend der Länge des Auslegers 29 ausfüllt.

Wenn der Benutzer ausgehend von dieser Betriebsstellung das Heckfensterrollo 8 ausfahren will, setzt er über einen nicht weiter gezeigten elektrischen Schalter den Antriebsmotor 31 in Gang und zwar in einer solchen Drehrichtung, dass das Stirnzahnrad 38 das drucksteife bzw. drucksteif geführte Betätigungsglied 32 in Richtung auf die Führungsschiene 23 vorschiebt. Bei dieser Vorschubbewegung drückt das in dem Innenraum der Führungsschiene 23 geführte Betätigungsglied 32 den Führungsschlitten 26 zusammen mit dem daran befestigten Ausleger 29 nach oben in Richtung auf die Dachhinterkante 5. Dabei wird entsprechend Rollobahn 11 von der Wickelwelle 9 abgewickelt und durch den Rolloschlitz 7 in der Hutablage 6 nach oben herausgezogen.

Sobald der Schlitten 26 am oberen Ende der Führungsschiene 23 angekommen ist und an entsprechende Begrenzungsanschläge anstößt, steigt der Motorstrom an, was in bekannter Weise von einer an sich bekannten Überwachungsschaltung ausgewertet wird, um unabhängig von der Schaltersteuerung durch den Benutzer den Antriebsmotor 31 stromlos zu schalten. Die Anordnung sorgt in bekannter Weise ferner dafür, ein Wiedereinschalten des Motorstroms nur für die umgekehrte Drehrichtung zuzulassen.

Die Rollobahn 11 ist nunmehr vollständig ausgefahren und der Ausleger 29 stößt an der oberen Fensterrahmenkante 5 an. Vor der gesamten Fensterfläche ist die Rollobahn 11 aufgespannt.

Selbst wenn, wie gezeigt der Winkel zwischen der Führungsschiene 23 und der Achse der Wickelwelle 9 nicht 90° beträgt, können in der Rollobahn 11 keine Verspannungen auftreten, weil die Randverstärkungsleiste 22 sich in dem Ausleger 29 zumindest ein Stück weit längsverschieblich bewegen kann.

Ein Schwingen des Auslegers 29 läßt sich bei ausgefahrenen Heckfensterrollo 8 vermeiden, wenn entsprechend der oberen Endstellung an der Oberkante des Heckfenstern 3 eine hakenförmige Tasche 42 befestigt wird, die ein nach unten offene Nut 43 enthält. Die Nut 43 nimmt in der oberen Endstellung den Ausleger 29 an einer Stelle auf, die von dem Schlitten 26 beabstandet ist. Pendelbewegungen des Auslegers 53 um die Längsachse des Schlittens 49 sind dadurch mit Sicherheit ausgeschlossen.

Zum Einfahren des Heckfensterrollos 8 setzt der Benutzer den Elektromotor 31 über einen entsprechenden Schalter in der entgegengesetzten Drehrichtung in Funktion. Das Stirnzahnrad 38, das mit der Schraube 34 kämmt, zieht das Betätigungsglied 32 nach unten aus der Führungsschiene 23 zurück, wodurch die gegen den Schlitten 49 wirkende Vorschubkraft nachlässt. Der Federmotor 16 ist dadurch in der Lage entsprechend dem Zurückweichen des Betätigungsgliedes 32 die Rollobahn 11 wieder auf die Wickelwelle 9 aufzuwickeln.

Die untere Endstellung des Betätigungsgliedes kann in ähnlicher weise abgefragt werden, wie die obere Endstellung, und in entsprechender Weise stillgesetzt werden.

Ersichtlicherweise wird die Rollobahn 11 durch die Wirkung des Federmotors 16 gespannt gehalten, während die Position durch den selbsthemmend wirkenden Antriebsmotor 31 vorgegeben wird.

Wie sich aus der Erläuterung ergibt, könnte der Federantrieb 16 mit dem Antriebsmotor 31 auch die Plätze tauschen, in der Weise, dass der Antriebsmotor 31 die Wickelwelle 9 formschlüssig antreibt, während das Betätigungsglied 32 durch eine Druckfeder beaufschlagt oder eine solche ersetzt wird. Bei einer derartigen Ausführungsform würde der Schlitten 26 in Abwickelrichtung vorgespannt werden, während die Rollobahn 11 gegen die Wirkung der Feder 16 auf der Wickelwelle 9 aufgewickelt wird.

Es wäre schließlich auch denkbar, als Betätigungsglied 32 ein Seil zu verwenden, das einends an dem Schlitten 26 befestigt ist und anderenends an einer Zugfeder. Die Zugfeder würde über das Seil ebenfalls bestrebt sein, den

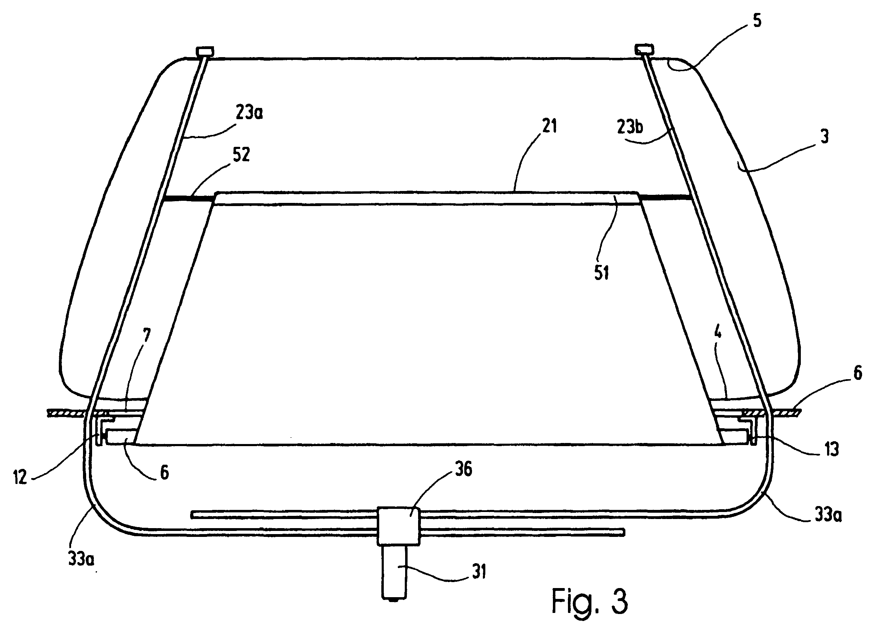

In Figur 3 ist ein Ausführungsbeispiel für ein Heck fensterrollo 8 veranschaulicht, das zwei Führungsschienen 23a und 23b aufweist. Die Führungsschienen 23a und 23b haben dieselbe Querschnittsgestalt, wie dies im Zusammenhang mit Fig. 2 ausführlich erläutert ist. Die Führungsschiene 23a verläuft im Wesentlichen gerade entsprechend dem Verlauf der rechten Fensterrahmenkante, während die Führungsschiene 23b etwa parallel zu der linken Heckfensterkante ausgerichtet ist.

Für welche Kombination von geoffenbarten Merkmalen sich der Konstrukteur entscheidet, steht in seinem Belieben und hängt vor allen Dingen von den zur Verfügung stehenden Randbedingungen, wie Fenstergröße, Fensterproportionen und Fenstergeometrie, Platz in der Heckinnenverkleidung oder unterhalb der Hutablage und dergleichen ab. Darüber hinaus versteht sich, dass die gezeigten Heckfensterrollos keineswegs auf Anwendungen bei Stufenhecklimousinen beschränkt ist. Das erfindungsgemäße Heckfensterrollo läßt sich ohne weiteres auch implementieren, indem es hinter der Verkleidung der C-Säule eingebaut wird. Lediglich um die Zahl der Ausführungsbeispiele auf ein vernünftiges Maß zu beschränken, sind ausgewählte Merkmalskombinationen dargestellt und erläutert.

Ein Heckfensterrollo für Kraftfahrzeuge weist eine Wickelwelle auf, die vorzugsweise unter der Hutablage drehbar gelagert ist. Durch einen Schlitz in der Hutablage kann eine Rollobahn herausgezogen werden, die das Fenster abdeckt. Zu diesem Zweck greift an der Kante der Rollobahn, die den weitesten Weg zurücklegt, ein Betätigungsglied an. Das Betätigungsglied ist ein linienförmiges Element, das je nach Ausführung entweder zugfest ist oder drucksteif. Die Rollobahn selbst kann neben dem Fenster mit Hilfe wenigstens einer Führungsschiene oder ein oder zwei druck- oder biegesteifen Betätigungsgliedern aufgespannt gehalten werden.

## Patentansprüche

1. Heckfensterrollo (8) für Kraftfahrzeuge, das von einer unteren etwa horizontal verlaufenden Fensterrahmenkante (4) sowie zwei seitlichen etwa senkrecht verlaufenden Fensterrahmenkanten (2) und einer oberen horizontal verlaufenden Fensterrahmenkante (5) begrenzt ist,
mit einer drehbar gelagerten Wickelwelle (9),
mit einer Rollobahn (11), deren Zuschnitt zumindest in einem Abschnitt ihrer Längserstreckung zumindest angenähert der Form des Heckfensters (3) entspricht und die einen umlaufenden Rollobahnrand aufweist, der einen Abschnitt bildet, der an der Wickelwelle (9) befestigt ist, sowie einen Abschnitt (21), der von der Wickelwelle (9) abliegt, **dadurch gekennzeichnet, dass** das Heckfensterrollo wenigstens einem Seil (32) aufweist, das mit dem von der Wickelwelle (9) abliegenden Abschnitt (21) des Rollobahnrands verbunden ist, und
Antriebsmitteln (16,31) zum kraftbetätigten Ein- und Ausfahren der Rollobahn aufweist,
wobei zu den Antriebsmitteln (16,31) eine Zugfeder, die über das Seil (32) mit der Rollobahn (11) verbunden ist und die Rollobahn (11) im Sinne des Abwickelns von der Wickelwelle (9) vorspannt, und wenigstens ein Getriebemotor (31) gehören, der mit der Wickelwelle (9) gekoppelt ist.

2. Heckfensterrollo nach Anspruch 1, **dadurch gekennzeichnet, dass** die Wickelwelle (9) etwa seitlich neben dem Heckfenster (3) verlaufend angeordnet ist.

3. Heckfensterrollo nach Anspruch 1, **dadurch gekennzeichnet, dass** die Wickelwelle (9) etwa horizontal verlaufend unterhalb des Heckfensters (3) angeordnet ist.

4. Heckfensterrollo nach Anspruch 1, **dadurch gekennzeichnet, dass** wenigstens eine Führungsschiene (23) vorgesehen ist.

5. Heckfensterrollo nach Anspruch 1, **dadurch gekennzeichnet, dass** zwei Führungsschienen (23a,23b) vorgesehen sind.

6. Heckfensterrollo nach Anspruch 5, **dadurch gekennzeichnet, dass** die wenigstens eine Führungsschiene (23) horizontal verlaufend angeordnet ist.

7. Heckfensterrollo nach Anspruch 5, **dadurch gekennzeichnet, dass** die wenigstens eine Führungsschiene (23) parallel zu der unteren Fensterrahmenkante (4) verläuft.

8. Heckfensterrollo nach Anspruch 5, **dadurch gekennzeichnet, dass** die wenigstens eine Führungsschiene (23) seitlich neben dem Heckfenster (3) verlaufend angeordnet ist.

9. Heckfensterrollo nach Anspruch 5, **dadurch gekennzeichnet, dass** die wenigstens eine Führungsschiene (23) parallel zu der seitlichen Fensterrahmenkante (2) verläuft.

10. Heckfensterrollo nach Anspruch 1, **dadurch gekennzeichnet, dass** der Rollobahnrand zumindest in einem von der Wickelwelle (9) abliegenden Abschnitt (21) eine Randverstärkung (22,52) aufweist.

11. Heckfensterrollo nach Anspruch 10, **dadurch gekennzeichnet, dass** die Randverstärkung (22) flexibel ist.

12. Heckfensterrollo nach Anspruch 10, **dadurch gekennzeichnet, dass** ein Abschnitt der Randverstärkung (22) steif ist.

13. Heckfensterrollo nach Anspruch 10, **dadurch gekennzeichnet, dass** zumindest ein Abschnitt der Randverstärkung (22) als Zugstange dient.

14. Heckfensterrollo nach Anspruch 4, **dadurch gekennzeichnet, dass** die Rollobahn (11) mit wenigstens einem Spriegel (52) versehen ist, der in der wenigstens einen Führungsschiene (23) endseitig geführt ist.

15. Heckfensterrollo nach Anspruch 14, **dadurch gekennzeichnet, dass** der wenigstens eine Spriegel (52) beidends in Führungsschienen (23a,23b) geführt ist.

16. Heckfensterrollo nach Anspruch 14, **dadurch gekennzeichnet, dass** der Spriegel (52) teleskopisch längenverstellbar ist.

17. Heckfensterrollo nach Anspruch 5, **dadurch gekennzeichnet, dass** in der wenigstens einen Führungsschiene (23) ein Schlitten (26) geführt ist, an dem ein Ausleger (29) befestigt ist, mit dem ein Abschnitt (21) des Rollobahnrands verbunden ist.

18. Heckfensterrollo nach Anspruch 17, **dadurch gekennzeichnet, dass** der Abschnitt (21) der Rollobahnrands mit dem Ausleger (29) längsverschieblich verbunden ist.

## Claims

1. Rear window roller blind (8) for motor vehicles, which is bordered by a lower window frame edge (4) running approximately horizontally and also two side window frame edges (2) running approximately perpendicular and an upper window frame edge (5) running horizontally,
with a rotatably disposed winding shaft (9),
with a blind (11), the blank of which corresponds at least approximately to the shape of the rear window (3) at least in one section of its longitudinal extension and which has a circumferential roller blind edge, which forms a section, which is fastened to the winding shaft (9), as well as a section (21), which is remote from the winding shaft (9),
**characterised in that** the rear window roller blind has at least one rope (32), which is connected to the section (21) of the roller blind edge remote from the winding shaft (9), and
drive means (16, 31) for power-operated retraction and extension of the blind, wherein a tension spring, which is connected to the blind (11) via the rope (32) and prestresses the blind (11) in the direction of unwinding the winding shaft (9), and at least one geared motor (31), which is coupled to the winding shaft (9), form part of the drive means (16, 31).

2. Rear window roller blind according to Claim 1, **characterised in that** the winding shaft (9) is disposed to run approximately laterally next to the rear window (3).

3. Rear window roller blind according to Claim 1, **characterised in that** the winding shaft (9) is disposed to run approximately horizontally below the rear window (3).

4. Rear window roller blind according to Claim 1, **characterised in that** at least one guide rail (23) is provided.

5. Rear window roller blind according to Claim 1, **characterised in that** two guide rails (23 a, 23b) are provided.

6. Rear window roller blind according to Claim 5, **characterised in that** the at least one guide rail (23) is disposed to run horizontally.

7. Rear window roller blind according to Claim 5, **characterised in that** the at least one guide rail (23) runs parallel to the lower window frame edge (4).

8. Rear window roller blind according to Claim 5, **characterised in that** the at least one guide rail (23) is disposed to run laterally next to the rear window (3).

9. Rear window roller blind according to Claim 5, **characterised in that** the at least one guide rail (23) runs parallel to the side window frame edge (2).

10. Rear window roller blind according to Claim 1, **characterised in that** the roller blind edge has an edge reinforcement (22, 52) at least in a section (21) remote from the winding shaft (9).

11. Rear window roller blind according to Claim 10, **characterised in that** the edge reinforcement (22) is flexible.

12. Rear window roller blind according to Claim 10 **characterised in that** a section of the edge reinforcement (22) is rigid.

13. Rear window roller blind according to Claim 10, **characterised in that** at least one section of the edge reinforcement (22) serves as a pull rod.

14. Rear window roller blind according to Claim 4, **characterised in that** the blind (11) is provided with at least one rib (52), which is disposed in the at least one guide rail (23) at the end.

15. Rear window roller blind according to Clam 14, **characterised in that** the at least one rib (52) is disposed in guide rails (23a, 23b) at both ends.

16. Rear window roller blind according to Claim 14 **characterised in that** the rib (52) is telescopically adjustable in length.

17. Rear window roller blind according to Claim 5, **characterised in that** in the at least one guide rail (23) a runner (26) is disposed, to which an arm (29) is fastened, to which a section (21) of the roller blind edge is connected.

18. Rear window roller blind according to Claim 17, **characterised in that** the section (21) of the roller blind edge is connected to the arm (29) to belongitudinally displaceable.

## Revendications

1. Store à enrouleur (8) pour lunettes arrière de véhicules automobiles, qui est délimité par un bord de cadre de vitre (4) inférieur, sensiblement horizontal, ainsi que par deux bords de cadre de vitre (2) latéraux, sensiblement verticaux, et un bord de cadre de vitre (5) supérieur, sensiblement horizontal, comprenant
une barre d'enroulement (9) montée tournante,
une bande (11) de store à enrouleur, dont le panneau, au moins dans une portion de sa longueur, correspond au moins approximativement à la forme de la lunette arrière (3) et qui présente un bord périphérique de bande de store à enrouleur, lequel bord forme une portion fixée à la barre d'enroulement (9), ainsi qu'une portion (21) éloignée de la barre d'enroulement (9), **caractérisé en ce que** le store pour lunette arrière présente
au moins un câble (32), qui est relié à la portion (21) de store à enrouleur éloignée de la barre d'enroulement (9), et
des moyens d'entraînement (16,31) pour opérer l'enroulement et le déroulement motorisés de la bande de store,
les moyens d'entraînement (16,31) englobant un ressort de traction, qui est relié via le câble (32) à la bande de store (11) et met ladite bande de store (11) sous précontrainte, dans le sens du déroulement de la barre d'enroulement (9), et au moins un moto-réducteur (31) qui est couplé à la barre d'enroulement (9).

2. Store à enrouleur pour lunettes arrière selon la revendication 1, **caractérisé en ce que** la barre d'enroulement (9) est disposée à peu près latéralement à côté de la lunette arrière (3).

3. Store selon la revendication 1, **caractérisé en ce que** la barre d'enroulement (9) est disposée à peu près horizontalement, en-dessous de la lunette arrière (3).

4. Store selon la revendication 1, **caractérisé en ce qu'**il est prévu au moins un rail de guidage (23).

5. Store selon la revendication 1, **caractérisé en ce qu'**il est prévu deux rails de guidage (23a, 23b).

6. Store selon la revendication 5, **caractérisé en ce que** le rail de guidage (23), au nombre d'au moins un, est disposé horizontalement.

7. Store selon la revendication 5, **caractérisé en ce que** le rail de guidage (23), au nombre d'au moins un, est parallèle au bord de cadre de vitre (4) inférieur.

8. Store selon la revendication 5, **caractérisé en ce que** le rail de guidage (23), au nombre d'au moins un, est disposé latéralement à côté de la lunette arriére (3).

9. Store selon la revendication 5, **caractérisé en ce que** le rail de guidage (23), au nombre d'au moins un, s'étend parallèlement au bord de cadre de vitre (2)latéral.

10. Store selon la revendication 1, **caractérisé en ce que** le bord de la bande de store présente un élément de renfort de bord (22, 52), au moins dans une portion (21) éloignée de la barre d'enroulement (9).

11. Store selon la revendication 10, **caractérisé en ce que** l'élément de renfort de bord (22) est flexible.

12. Store selon la revendication 10, **caractérisé en ce qu'**une portion de l'élément de renfort de bord (22) est rigide.

13. Store selon la revendication 10, **caractérisé en ce qu'**au moins une portion de l'élément de renfort de bord (22) sert de barre de traction.

14. Store selon la revendication 4, **caractérisé en ce que** la bande de store(11) est pourvue d'au moins un arceau (52) qui est monté côté extrémité dans le rail de guidage (23), au nombre d'au moins un.

15. Store selon la revendication 14, **caractérisé en ce que** l'arceaud (52), au nombre d'au moins un, est monté avec ses deux extrémités dans des rails de guidage (23a, 23b).

16. Store selon la revendication 14, **caractérisé en ce que** l'arceau (52) est réglable en longueur de manière télescopique.

17. Store selon la revendication 5, **caractérisé en ce qu'**un chariot (26) est guidé dans le rail de guidage (23), au nombre d'au moins un, auquel chariot est fixé un bras (29) auquel est liée une portion (21) du bord de la bande de store.

18. Store selon la revendication 17, **caractérisé en ce que** la portion (21) du bord de la bande de store est liée au bras (29) avec possibilité de coulissement longitudinal.
